# EUROPEAN PATENT SPECIFICATION

(11) **EP 2 523 842 B1**
(45) Date of publication and mention of the grant of the patent: **17.07.2019**
(21) Application number: 10842340.1
(22) Date of filing: 14.12.2010
(51) Int. Cl.: B62D 5/00, B62D 15/00, B62D 5/30

(54) **DEVICE FOR ACTIVE STEERING OF A VEHICLE AND A STEERING MECHANISM WITH SUCH A DEVICE**
VORRICHTUNG ZUR AKTIVEN LENKUNG EINES FAHRZEUG UND LENKMECHANISMUS MIT EINER SOLCHEN VORRICHTUNG
DISPOSITIF POUR LA DIRECTION ACTIVE D'UN VÉHICULE ET MÉCANISME DE DIRECTION MUNI D'UN TEL DISPOSITIF

(30) Priority: 11.01.2010 SE 1050009
(43) Date of publication of application: 21.11.2012
(73) Proprietor: Scania CV AB, 151 87 Södertälje (SE)
(72) Inventor: ROTHHÄMEL, Malte, 141 42 Huddinge (SE)
(74) Representative: Scania CV AB
(86) International application number: PCT/SE2010/051376
(87) International publication number: WO 2011/084095

(56) References cited:
- EP-A1- 1 693 599
- EP-A1- 1 697 201
- EP-A1- 2 050 653
- GB-A- 2 395 469
- US-A- 3 172 299
- US-A- 5 205 371
- US-A1- 2004 251 061
- US-A1- 2007 017 734
- KLIER, W. ET AL.: 'Concept and Functionality of the Active front Steering system' SAE PAPER 2004-21-0073 2004, XP055093584

## Description

### TECHNICAL FIELD

The invention relates to a device for active steering of a truck provided with a power steering arrangement, comprising a steering wheel gear of differential type for transmitting to an output shaft both a steering wheel angle deflection from an input shaft, and a steering angle deflection superimposed on the steering wheel angle deflection from a positioning means. The invention also relates to a steering arrangement with such a device.

### BACKGROUND

In a known device of this type, the steering wheel angle deflection by the driver thus forms a first input to the differential gear, and the superimposed steering angle deflection a second input.

An advantage of such a device for active steering is that only a small electric motor is required in the steering system, since the necessary steering moments are provided by the power steering. When the known device is used in cars, the driver can continue to steer the vehicle purely manually with a steering ratio of 1:1 in the event of failure of the power steering and the electric motor.

The reason for this is that it is desired not to alter the steering without an external control signal for the superimposed steering angle deflection, but to add the active steering function to an existing steering system so that the same standing ratio of 1:1 applies when the positioning means in the form of an electric motor is inoperative. There are thus many possible ways of assisting the driver during driving. For example, the external control signal may serve to continuously alter the steering ratio so that it decreases as the vehicle speed increases and increases when the vehicle is stationary. In a car, the whole ratio of the steering arrangement may for example be 1:13, making it possible to use the electric motor to add an angle and alter the ratio dynamically during driving. Really fast driving on a motorway reduces the ratio slightly, e.g. to 1:15-17. When parking, the driver will be unwilling to turn the steering wheel so much. This situation leads to endeavouring to achieve a rather direct ratio. Another possibility is to use the active steering in various ways to correct the steering wheel deflection, e.g. to counter a side wind or a sloping carriageway or deviations of the steering wheel deflection from the extent of the carriageway.

Any attempt to use the same technology in a truck encounters the problem of the vehicle being too heavy to steer in the event of failure of the hydraulic power steering. At present it is normally only possible to steer two-axle trucks in the event of failure of the hydraulic power steering. More axles and, above all, more steered axles result in turning moments which are too great to overcome. A possible way of solving this is to install an extra hydraulic pump in the steering system, which is a relatively expensive solution but unavoidable with current technology. Document EP 1 697 201 A1 is seen as the closest prior art and discloses a device comprising a steering wheel connected to a variable transmission being connected to a steering gear of gear worm type and a hydraulic servo device which is connected to the steering gear. The control of the gear ratio in the variable transmission is carried out in response to the function of the servo device.

### SUMMARY OF THE INVENTION

One object of the invention is to further develop a device of the type indicated in the introduction, so that it can with advantage also be used on heavy trucks. In other words, the device has to be capable of utilising all the potential of active steering but at the same time be able to operate safely in the event of failure of the power steering function.

According to the invention, the transmission of the steering wheel angle deflection in the steering wheel gear is catered for by a gear step to gear down the steering wheel angle deflection to the output shaft, with a ratio such that the truck can be steered manually in the event of failure of the power steering.

The insight on which the invention is based is that a ratio not of 1:1 but, for example, 1:2 in the steering wheel gear from input to output can reduce the ratio of the whole steering arrangement from normally typically around 1:19 to, for example, 1:38. This enables the driver to steer without power steering and without assistance from the positioning means. The resulting synergy effect is that when the vehicle is equipped with active steering thus configured there is no need for an extra pump in the steering system to ensure safety from power steering failure. Certainly the positioning means/electric motor then has to work more during normal operation, but this is a minor problem.

The steering wheel gear may typically have a ratio of between around 1:1.3 and 1:3, particularly around 1:2.

The steering angle deflection by the steering wheel gear's positioning device may be blocked when the positioning means and/or the power steering system are/is inoperative. This ensures that the angle superimposing step of the steering wheel gear does not accompany and render the steering wheel gear inoperative if the positioning means is also out of action. This may be achieved, for example, by means of a self-inhibiting worm and pinion gear of the angle superimposing step or by means of a spring-loaded pin which blocks the angle superimposing step if the power supply to the positioning means fails. However, it may also be desirable to block this angle superimposing step when the power steering only is out of action, i.e. independently of the function of the positioning means.

The steering wheel gear may comprise a double planetary gear with an input sun wheel, an output sun wheel and a pair of planet wheels arranged in active engagement on common spindles between the sun wheels. The required downward gearing can then be achieved easily by reducing the number of teeth of the input sun wheel relative to the output sun wheel and adjusting accordingly the respective numbers of teeth of the planetary gears.

Other features and advantages of the invention may be indicated by the claims and description of embodiment examples set out below.

### BRIEF DESCRIPTION OF THE DRAWINGS

Fig. 1 is a schematic side view, partly in section, of a power assisted steering arrangement with a steering wheel gear according to the invention;
Fig. 2 is a schematic perspective view, partly in section, of a steering wheel gear according to the invention; and
Fig. 3 is a schematic sectional view of a power assisted steering arrangement with a modified steering wheel gear according to the invention;

Parts with the same or similar functions have identical reference numbering throughout the drawings.

### DETAILED DESCRIPTION OF EMBODIMENT EXAMPLES

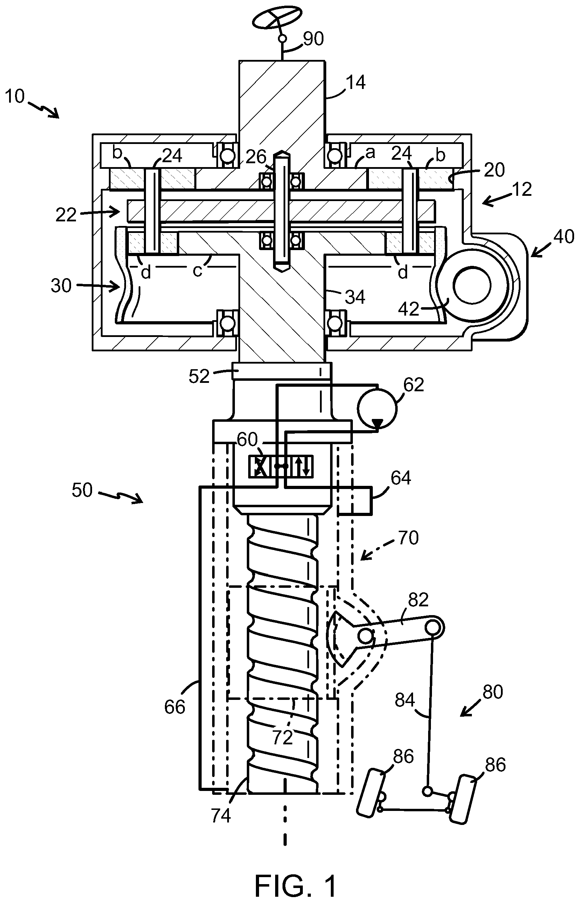

The steering arrangement shown in Fig. 1 has a steering wheel gear 10 and, connected to the latter, a power steering arrangement 50.

In the example shown, the power steering 50 is arranged in approximately the following manner:
An input shaft 52 can switch an undepicted rotatable valve body in a schematically depicted hydraulic valve 60 of the power steering 50. The valve 60 is supplied with pressurised hydraulic fluid by a hydraulic motor 62 in order to distribute the hydraulic fluid to opposite ends of a hydraulic cylinder 70 via pipes 64, 66. The hydraulic cylinder 70 accommodates a ball nut bushing 72 fastened to it, for joint rotation with it, in the form of a hydraulic piston capable of linear movement which is in threaded engagement with a ball screw 74 of the power steering 50. The ball screw 74 is itself connected to the input shaft 52 via an undepicted torsion rod which returns the valve 60 to an inoperative open central position when no turning moment is exerted on the input shaft 52.

When a turning moment is exerted on the input shaft 52 by the steering wheel gear 10, the valve 60 is switched in one direction or the other. At the same time, the turning moment acts upon the ball screw 74, which attempts to rotate in the corresponding direction. The valve 60 distributes a control pressure to the corresponding lower or upper end of the ball nut bushing 72 so that the turning moment on the ball screw 74 is amplified and the ball screw 74 is caused to rotate when the ball nut bushing 72 moves. To convert the linear movement of the ball nut bushing 72 to a steering movement of a pair of vehicle wheels, the ball nut bushing 72 is in toothed engagement on one side with one end of a lever 82 which has its other end connected to a link 84 in a draglink mechanism 80 for the vehicle wheels 86. When the turning moment on the input shaft 52 ceases because the steering gear 10 relieves the pressure on the power steering by not providing further angle input to the input shaft 52, the latter springs back with the aid of the abovementioned torsion rod so that the valve 60 returns to the inoperative central position and the steering movement ceases.

The steering wheel gear 10 has a gear housing 12 which supports for rotation an input shaft 14 which is fastened to, for joint rotation with, a steering wheel 90, and an output shaft 34 which is fastened to, for joint rotation with, the input shaft 52 of the power steering 50.

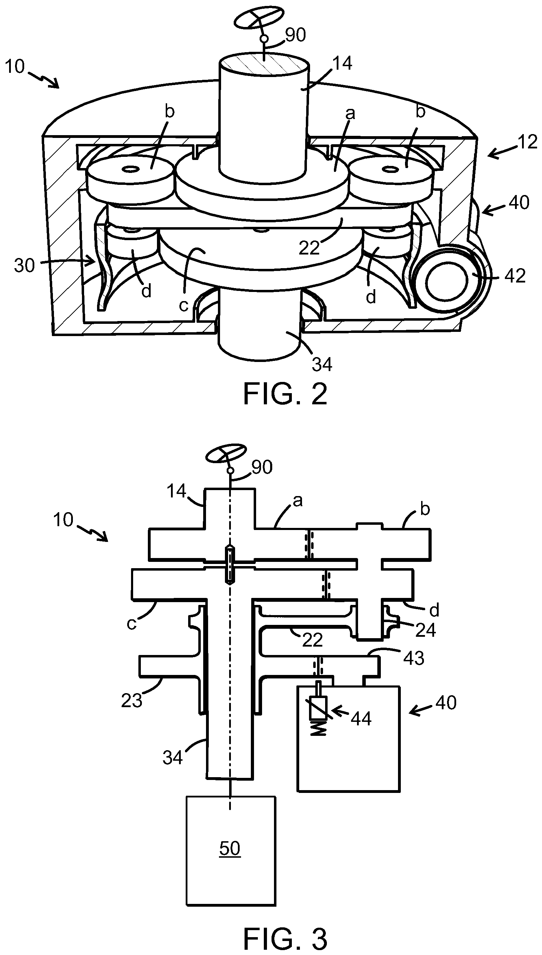

Although a steering wheel gear according to the invention may be configured in other ways, the steering wheel gear 10 in the example shown in Figs. 1 and 2 is arranged as a planetary gear of differential type in approximately the following manner:
The input shaft 14 is formed at its inner end with an input sun wheel a which is in toothed engagement with a number of mutually identical input planet wheels b. The planet wheels b are mounted for rotation at one end of spindles 24 of a planet wheel carrier 22. The planet wheels are also in toothed engagement with a ring gear 20 formed on the inside of the housing 12.

Similarly, the output shaft 34 is formed at its inner end with an output sun wheel c which is in toothed engagement with a number of mutually identical output planet wheels d. The sun wheels a and c are mounted on a central spindle 26 which may be connected to, for joint rotation with, the planet wheel carrier 22. The planet wheels d are mounted for rotation at the other end of the spindles 24 of the planet wheel carrier 22. The planet wheels d are also in toothed engagement with the inside of an annular worm wheel 30 which has its outside in engagement with a worm pinion 42. The worm pinion 42 may be driven in rotation by a positioning means in the form of an electric motor 40.

The steering wheel gear 10 takes the form of a differential gear, in which the gear wheels a, b, c, d may be regarded as forming a gear step to gear down the steering wheel angle deflection to the output shaft. The worm pinion 42 together with the worm wheel 30 and the gear wheels c, d may then be regarded as forming a gear step for the assisting steering angle deflection by the electric motor 40. The steering wheel gear 10 is thus able to continuously alter the ratio between the input and output shafts 14 and 34.

The input shaft 14 may provide a first angle input from the driver and the electric motor 40 may provide a second angle input via an external control signal to the steering gear 10. A first input of the input shaft 14, which in isolation would provide an angle output α of the output shaft 34, may thus be modified by a second input from the electric motor 40, which in isolation would provide an angle output β of the output shaft 34, to result in a differentiated or superimposed angle output α±β of the output shaft 34.

As implied by the mutual size differences between the gear wheels a, b, c, d in Fig. 1, a downward gearing takes place between the input and output shafts 14, 34 of the steering wheel gear 10 according to the invention.

More specifically, the ratio is approximately between 1:1.3 and 1:3, particularly around 1:2, between the input shaft 14 and the output shaft 34 when the electric motor 40 is inoperative. This is achieved by appropriate choice of numbers of teeth z for the respective gearwheels a, b, c, d, the desired ratio i between the input and output shafts 14, 34 being obtainable by the relationship *i* = *(za*/*zb)* × *(zd*/*zc).*

In the steering wheel gear 10 shown in simplified form in Fig. 3, the planetary gear mainly differs from that shown in Fig. 2 in that the planet wheels b and d are connected to, for joint rotation with, one another via the common shaft 24 and that the planet wheel carrier 22 is connected to, for joint rotation with, a gear wheel 23 which is driven via a gear pinion 43 by the electric motor 40.

If the power steering and possibly also the electric motor 40 are out of action, the planet wheel carrier 22 may, as depicted schematically in the example in Fig. 3, be locked by a spring-loaded locking device 44 being released and appropriately blocking the rotation of the planet wheel carrier 22, e.g. by bilateral engagement between the gear wheel 23 and the gear pinion 43. In the embodiment shown in Figs. 1 and 2, the locking function may be achieved by the engagement between the worm wheel 30 and the worm pinion 42 being self-inhibiting such that the worm pinion 42 cannot be driven by the worm wheel 30.

The description set out above is primarily intended to facilitate understanding and no unnecessary limitations of the present invention are to be inferred therefrom. The modifications which will be obvious to one skilled in the art who peruses the description may be implemented without deviating from the concept of the present invention as defined in the appendent claims.

## Claims

1. Device for active steering of a truck provided with a hydraulic power steering (50), the device comprising a steering wheel gear (10) adapted to be connected to the hydraulic power steering (50), the steering wheel gear (10) being of differential type and being configured to transmit to an output shaft (34) both a steering wheel angle deflection from an input shaft (14) and a steering angle deflection which is superimposed on the steering wheel angle deflection by an electric motor (40) of the steering wheel gear (10), **characterised in that** the transmission of the steering wheel angle deflection in the steering wheel gear (10) is catered for by a gear step (a, b, c, d) to gear down the steering wheel angle deflection to the output shaft (34), with a ratio such that the truck can be steered manually in the event of failure of the hydraulic power steering (50).

2. A device according to claim 1, the gear step (a, b, c, d) having a ratio of between around 1:1.3 and 1:3.

3. A device according to claim 1 or 2, the gear step (a, b, c, d) having a ratio of around 1:2.

4. A device according to any of the foregoing claims, the superimposed steering angle deflection being arranged to be blocked when the electric motor (40) and/or the hydraulic power steering (50) are/is inoperative.

5. A device according to claim 4, the transmission of the superimposed steering angle deflection being arranged with self-inhibiting action.

6. A device according to claim 4, the transmission of the superimposed steering angle deflection being arranged to be blocked by a locking device (44) in the event of malfunction of the hydraulic power steering (50).

7. A device according to claim 1, the steering wheel gear (10) comprising a double planetary gear with an input sun wheel (a), an output sun wheel (c) and a pair of planet wheels (b, d) arranged in active engagement on common shafts between the sun wheels.

8. A steering arrangement for a truck, comprising a hydraulic power steering (50) and a device according to any of the foregoing claims.

## Patentansprüche

1. Vorrichtung zum aktiven Lenken eines Lastwagens, der mit einer hydraulischen Servolenkung (50) ausgestattet ist, wobei die Vorrichtung ein Lenkradgetriebe (10) umfasst, das dazu angepasst ist, mit der hydraulischen Servolenkung (50) verbunden zu werden, wobei das Lenkradgetriebe (10) von einem Differenzialtyp und dazu eingerichtet ist, an eine Ausgangswelle (34) sowohl eine Lenkradwinkel-Ablenkung von einer Eingangswelle (14) als auch eine Lenkwinkel-Ablenkung zu übertragen, welche der Lenkradwinkel-Ablenkung von einem Elektromotor (40) des Lenkradgetriebes (10) überlagert wird, **dadurch gekennzeichnet, dass** für die Übertragung der Lenkradwinkel-Ablenkung in dem Lenkradgetriebe (10) durch eine Gangstufe (a, b, c, d) gesorgt ist, welche die Lenkradwinkel-Ablenkung zu der Ausgangswelle (34) mit einem Verhältnis derart untersetzt, dass der Lastwagen im Fall eines Ausfalls der hydraulischen Servolenkung (50) manuell gelenkt werden kann.

2. Vorrichtung gemäß Anspruch 1, wobei die Gangstufe (a, b, c, d) ein Verhältnis zwischen etwa 1:1.3 und 1:3 aufweist.

3. Vorrichtung gemäß Anspruch 1 oder 2, wobei die Gangstufe (a, b, c, d) ein Verhältnis von etwa 1:2 aufweist.

4. Vorrichtung gemäß einem der vorhergehenden Ansprüche, wobei die überlagerte Lenkwinkel-Ablenkung dazu eingerichtet ist, blockiert zu werden, wenn der Elektromotor (40) und/oder die hydraulische Servolenkung (50) funktionsunfähig ist/sind.

5. Vorrichtung gemäß Anspruch 4, wobei die Übertragung der überlagerten Lenkwinkel-Ablenkung mit selbsthemmender Wirkung eingerichtet ist.

6. Vorrichtung gemäß Anspruch 4, wobei die Übertragung der überlagerten Lenkwinkel-Ablenkung dazu eingerichtet ist, im Fall einer Fehlfunktion der hydraulischen Servolenkung (50) von einer Sperrvorrichtung (44) blockiert zu werden.

7. Vorrichtung gemäß Anspruch 1, wobei das Lenkradgetriebe (10) ein doppeltes Planetengetriebe mit einem Eingangs-Sonnenrad (a), einem Ausgangs-Sonnenrad (c) und einem Paar von Planetenrädern (b, d) umfasst, die in aktivem Eingriff auf gemeinsamen Wellen zwischen den Sonnenrädern angeordnet sind.

8. Lenkanordnung für einen Lastwagen, umfassend eine hydraulische Servolenkung (50) und eine Vorrichtung gemäß einem der vorhergehenden Ansprüche.

## Revendications

1. Dispositif de direction active d'un camion pourvu d'une direction assistée hydraulique (50), le dispositif comprenant un engrenage de direction (10) apte à être relié à la direction assistée hydraulique (50), l'engrenage de direction (10) étant différentiel sont configurés pour transmettre à un arbre de sortie (34) à la fois une déviation de l'angle de direction depuis un arbre d'entrée (14) et une déviation de l'angle de direction qui se superpose à la déviation de l'angle de direction par un moteur électrique (40) de la direction (10), **caractérisée en ce que** la transmission de la déviation de l'angle de direction dans l'engrenage de direction (10) est assurée par un engrenage (a, b, c, d) pour réduire la déviation de l'angle de direction de l'arbre de sortie (34), avec un rapport tel que le camion puisse être dirigé manuellement en cas de défaillance de la direction assistée hydraulique (50).

2. Dispositif selon la revendication 1, le rapport d'engrenage (a, b, c, d) ayant un rapport compris entre environ 1:1,3 et 1:3.

3. Dispositif selon la revendication 1 ou 2, le rapport d'engrenage (a, b, c, d) ayant un rapport d'environ 1:2.

4. Dispositif selon l'une quelconque des revendications précédentes, la déviation d'angle de direction superposée étant agencée pour être bloquée lorsque le moteur électrique (40) et / ou la direction assistée hydraulique (50) sont/est inopérant(s).

5. Dispositif selon la revendication 4, la transmission de la déviation d'angle de direction superposée étant agencée avec une action auto-inhibante.

6. Dispositif selon la revendication 4, la transmission de la déviation d'angle de direction superposée étant agencée pour être bloquée par un dispositif de verrouillage (44) en cas de dysfonctionnement de la direction assistée hydraulique (50).

7. Dispositif selon la revendication 1, l'engrenage de direction (10) comprenant un double engrenage planétaire avec une roue solaire d'entrée (a), une roue solaire de sortie (c) et une paire de roues planétaires (b, d) agencés en engagement actif sur des arbres communs entre les roues solaires.

8. Agencement de direction pour un camion, comprenant une direction assistée hydraulique (50) et un dispositif selon l'une quelconque des revendications précédentes.
